Europäisches Patentamt

European Patent Office

Office européen des brevets

(11) Veröffentlichungsnummer: **0 357 971**
**A1**

## EUROPÄISCHE PATENTANMELDUNG

(21) Anmeldenummer: **89114466.9**

(22) Anmeldetag: **04.08.89**

(51) Int. Cl.5: **G06F 15/60 , G06F 15/72**

(30) Priorität: **18.08.88 DE 3828091**

(43) Veröffentlichungstag der Anmeldung:
**14.03.90 Patentblatt 90/11**

(84) Benannte Vertragsstaaten:
**CH DE FR GB IT LI**

(71) Anmelder: **Siemens Aktiengesellschaft**
**Wittelsbacherplatz 2**
**D-8000 München 2(DE)**

(72) Erfinder: **de la Chaux, Detlef, Dipl.-Ing. (TU)**
**Isartal Strasse 44**
**D-8000 München 5(DE)**
Erfinder: **Hubert, Günter, Dipl.-Ing. (TU)**
**Rossinistrasse 13**
**D-8011 Baldham(DE)**
Erfinder: **Mattke, Ernst, Dipl.-Ing. (FH)**
**Frühlingsstrasse 4**
**D-8702 Helmstadt(DE)**

(54) Verfahren zum Verändern eines rechnergespeicherten CAD-3D-Modells eines Gussformteiles im Hinblick auf Schwindung.

(57) Die Erfindung bezieht sich auf ein Verfahren zum Verändern eines rechnergespeicherten CAD-3D-Modells eines Gußformteiles im Hinblick auf Schwindung. Hierbei wird die Modifizierung von CAD-3D-Modellflächen ($F_k$) aufgrund der schwindungsbedingten Ortsänderung von zugehörigen charakteristischen Punkten ($P_i$) vorgenommen, wobei die Berechnung die Lage der charakteristischen Punkte zu einem ortsfesten Anspritzpunkt (A), den Fließweg ($F_R$) der Schmelze im CAD-3D-Modell und die unterschiedlichen Längs- und Querschwindungsfaktoren berücksichtigt.

FIG 1

EP 0 357 971 A1

# Verfahren zum Verändern eines rechnergespeicherten CAD-3D-Modells eines Gußformteiles im Hinblick auf Schwindung

Für die Herstellung von Gußformteilen verwendet man Gußformen. Sie werden unter Berücksichtigung von technologischen Gegebenheiten vom Gußformteil abgeleitet. Eine dieser Gegebenheiten ist die Schwindung des Werkstoffes. Die Erfindung behandelt die Berechnung und Einbringung der Schwindmaße bei der Konstruktion von Gußformen mit CAD-3D.

Das von der Gußform freigegebene, noch heiße Gußformteil schwindet beim Erkalten. Die damit verbundene Änderung seiner Abmessungen (Schwindung) muß bereits bei der Konstruktion der Gußform berücksichtigt werden. Ist der Werkstoff ein Kunststoff und enthält er Füllstoffe, wie z.B. Glasfasern, so richten sich diese beim Füllen der Gußform längs der Fließrichtung der Schmelze aus. Die Formänderung durch die Schwindung ist dann anisotrop: sie hängt wesentlich von der Ausrichtung der Fasern ab. Bei faserverstärkten Gußteilen mit nicht einfacher räumlicher Ausprägung kann die manuelle Berechnung der schwindungsbedingten Formänderung - die sogenannte "Schwindmaßeinbringung" -so komplex werden, daß sie in der Praxis u.U. durch den direkten Versuch ersetzt und eine eventuelle teure Nacharbeit der Gußform in Kauf genommen wird.

Bei der konventionellen Schwindmaßermittlung verwendet der Formzeugkonstrukteur eine Kopie der technischen Zeichnung des Formteils. Nachdem er sich in die räumliche Geometrie des Formteils eingearbeitet hat, legt er für einige der vom Formteilkonstrukteur tolerierten Maße die sogenannten Zielmaße fest.

Die Zielmaße sind die bei der Produktion der Formteile anzustrebenden Maße. So wird z.B. aus dem tolerierten Abstandsmaß 40 ( + 0,1/-0,05) das Zielmaß 40,08.

Ausgehend von den in der Zeichnung des Formteils eingetragenen (oder gedachten) Zielmaßen werden nun die Schwindmaße berechnet. Zur Schwindmaßberechnung muß der Formwerkzeugkonstrukteur die Fließrichtungen der Schmelze in der Formhöhlung des Formwerkzeugs kennen und diese gedanklich auf die Ansichten in der technischen Zeichnung projizieren: Schwindmaße quer zur Fließrichtung werden durch Multiplikation mit dem Querschwindungsfaktor berechnet, Schwindmaße längs zur Fließrichtung durch Multiplikation mit dem Längsschwindungsfaktor (Hilfsmittel dafür ist z.B. ein Taschenrechner). Bei Maßverhältnissen, die sich nicht eindeutig der Längs- oder Querschwindung zuordnen lassen, wird die Schwindmaßberechnung unsicher.

Auch bei Einsatz eines konventionellen CAD-Systems vereinfacht sich die Schwindmaßeinbringung nicht. Die Berechnung jedes einzelnen Schwindmaßes erfolgt weiterhin manuell. In einem CAD-2D-System geschieht die Schwindmaßeinbringung durch manuelles Verschieben und/oder Verlängern von einzelnen Konturelementen, in einem CAD-3D-System durch manuelles Verschieben und/oder Modifizieren jeder betroffenen Fläche. Bei komplexen Formteilen führt deswegen die komplette Neuerzeugung des CAD-Schwindmaßmodells eventuell schneller zum Ziel.

Es stellt sich somit die Aufgabe, ein Verfahren anzugeben, mit dem die Schwindmaßermittlung und Schwindmaßeinbringung automatisiert durchgeführt werden kann. Diese Aufgabe wird gemäß den kennzeichnenden Merkmalen des Anspruchs 1 gelöst.

Im Gegensatz zur konventionellen Schwindmaßeinbringung ist die Ausgangsbasis im CAD-3D-System nicht die technische Zeichnung ( = Tusche auf Papier), sondern ein konsistentes CAD-3D-Modell des Formteils ( = rechnerinterne Datenstruktur).

Die Erfindung betrifft damit ein Verfahren, das aus einem CAD-3D-Modell eines Gußformteils mit Zielabmessungen ( = Zielmaßmodell) ohne großen Benutzeraufwand ein topologisch gleiches Modell mit Schwindmaßabmessungen erstellt ( = Schwindmaßmodell). Vom Schwindmaßmodell des Gußformteils wird dann im CAD-3D die Gußform abgeleitet. Erst diese "automatisierte Schwindmaßeinbringung" ermöglicht eine durchgängige Verfahrenskette vom Formteil zum Formwerkzeug.

Die automatisierte Schwindmaßeinbringung erspart dem Formwerkzeugkonstrukteur die Verschiebung bzw. Modifikation für jede einzelne Fläche des Zielmaßmodells selbst zu berechnen und durchzuführen.

Der Formwerkzeugkonstrukteur gibt den Fließweg der Schmelze in der Formhöhlung angenähert als geradlinigen Linienzug im Zielmaßmodell an. Weiterhin definiert er die beiden Schwindungsfaktoren längs und quer zur Fließrichtung.

Im CAD-3D-System wird die Geometrie des Schwindmaßmodells automatisch berechnet, sowie die Modifikation vom Zielmaßmodell zum Schwindmaßmodell automatisch durchgeführt.

Neben der Arbeitsersparnis bietet dieses Vorgehen die Gewähr, daß kein Maß bei der Schwindmaßeinbringung unberücksichtigt bleibt. Zudem können Schwindmaße, die früher entweder aufgrund der Längsschwindung oder der Querschwindung berechnet wurden, jetzt vom Rechner exakt nach dem anteiligen Einfluß von Längsund Querschwindung berechnet und eingebracht werden.

Das Verfahren sei anhand eines in der Zeichnung dargestellten Ausführungsbeispiels erläutert. Gegeben sei eine einzelne Modellpartie eines Formteils; es zeigen:

FIG 1 die Ermittlung von Punktverschiebevektoren

FIG 2 die Ermittlung von Flächenverschiebevektoren

FIG 3 ursprüngliches Modell und Ergebnis und

FIG 4 das Verfahren im Rahmen einer durchgängigen Verfahrenskette.

Die Berechnung der Schwindmaße erfolgt nicht maßorientiert, sondern greift auf das rechnergespeicherte Zielmaßmodell zu. Bei Gußformteilen mit komplexer räumlicher Ausprägung treten viele Fließrichtungsänderungen der Schmelze in der Formhöhe auf. Deshalb werden am Zielmaßmodell vom Anwender mit Hilfe von CAD-Kommandos sogenannte "Modellpartien" definiert, die von der Schmelze längs eines zusammenhängenden, nicht verzweigenden Fließweges gefüllt werden. Das Zielmaßmodell kann aus einer Vielzahl von Modellpartien bestehen.

Ausgehend von einem oder mehreren Anspritzpunkten ( = Eintrittspunkt der Schmelze in die Formhöhlung) werden alle Modellpartien des Zielmaßmodells dem Verfahren des Patentanspruches unterworfen, wobei die Behandlung einer Modellpartie Auswirkungen auf die Lage der in Fließrichtung nachfolgenden Modellpartien hat.

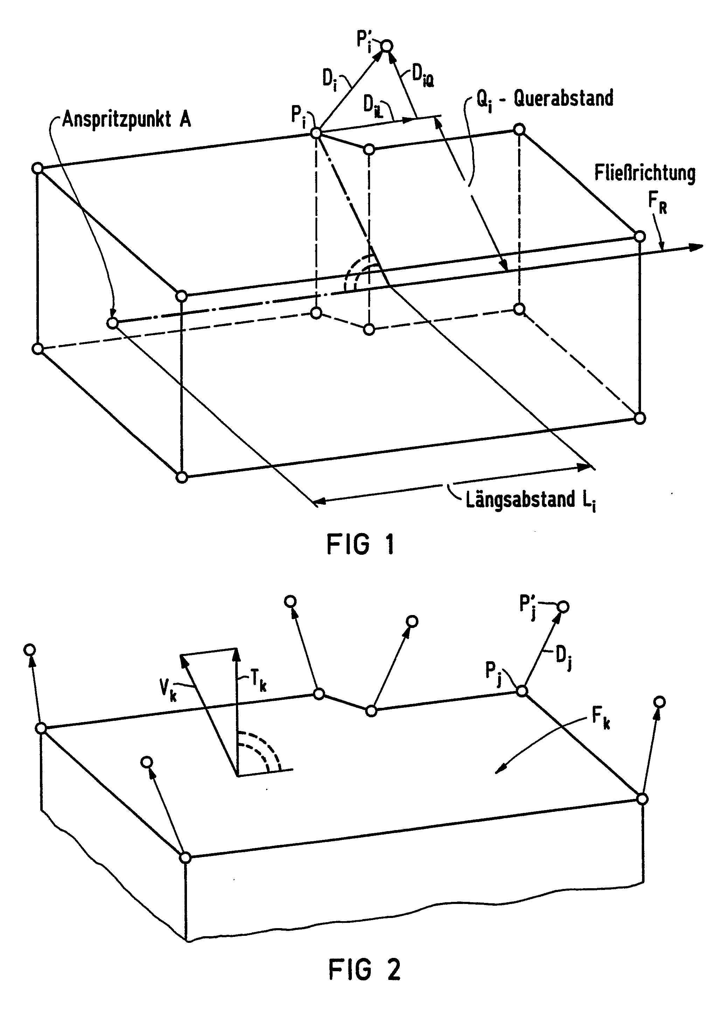

Basis für die Berechnung des Schwindungsverhaltens sind zwei unterschiedliche Schwindungsfaktoren längs und quer zur Fließrichtung der Schmelze. Die Fließrichtung $F_R$ (siehe FIG 1) ist durch den Anwender vorgegeben, ebenso die beiden unterschiedlichen Schwindungsfaktoren.

Eine Modellpartie hat n Punkte ($P_1 ... P_i ... P_n$). Jeder Punkt $P_i$ der Modellpartie hat zum Anspritzpunkt A einen Längsabstand $L_i$ in Fließrichtung $F_R$ und einen dazu senkrecht stehenden Querabstand $Q_i$.

Aus den Schwindungsfaktoren längs und quer zur Fließrichtung werden die erforderlichen Punktverschieburigen der Punkte $P_i$ um die Vektoren $D_{iL}$ und $D_{iQ}$ zu den imaginären Punkten $P_i'$ bestimmt. Als Summe ergeben sich die Punktverschiebungsvektoren $D_i$ aller Punkte $P_i$. Die Vektoren $D_i$ werden an den Punkten $P_i$ attributiv hinterlegt. Damit liegen für alle Punkte $P_i$ einer Modellpartie die Punktverschiebungsvektoren $D_i$ vor.

Eine Modellpartie hat o Flächen ($F_1 ... F_k ... F_o$). Jede Fläche $F_k$ der Modellpartie hat m Punkte zugeordnet ($P_l ... P_j ... P_m$), die eine Untermenge aller Punkte ($P_l ... P_i ... P_n$) der Modellpartie sind.

Für jede Fläche $F_k$ (siehe FIG 2) wird eine Flächenverschiebung berechnet, deren Verschubvektor $V_k$ sich aus den attributiv hinterlegten Punktverschiebevektoren $D_j$ der Punkte $P_j$ einer Fläche über folgendes Mittelwertverfahren errechnet:

$$V_k = (D_l + ... + D_j + ... D_m)/m$$

wobei $D_j$ die Punktverschiebevektoren der einzelnen Punkte $P_l$ der Fläche $F_k$ und m die Anzahl der dieser Fläche $F_k$ zugeordneten Punkte $P_j$ sind.

Zur Erreichung der Winkeltreue bei Anwendung des Verfahrens wird die Fläche $F_k$ um den Anteil $T_k$ ihres Vektors $V_k$ in Normalenrichtung verschoben. Aus Topologiegründen kann es teilweise erforderlich sein, mehrere Flächen in einer Gruppe zusammenzufassen und diese Gruppe um einen gemeinsamen Vektor zu verschieben.

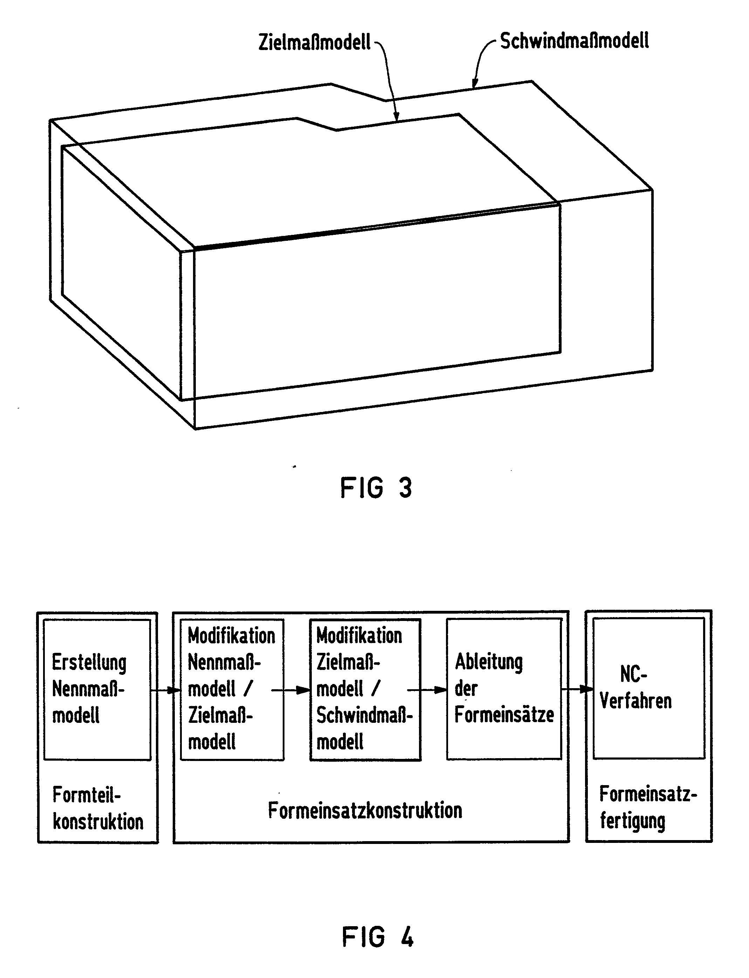

Ist die Verschiebung für alle Flächen $F_k$ der Modellpartie und für alle Modellpartien des CAD-3D-Modells durchgeführt, so ist - wie FIG 3 zeigt - aus dem ursprünglichen Zielmaßmodell das für die weitere Bearbeitung innerhalb der Verfahrenskette erforderliche Schwindmaßmodell entstanden.

In einem CAD-3D-Modell sind neben den beschriebenen ebenen Flächen auch gekrümmte Flächen enthalten, z.B. Zylinder- oder Kegelflächen. Für diese werden analog zu den beschriebenen ebenen Flächen Verschiebungen der Flächenachsen berechnet und eingebracht.

Die Durchmesseränderungen werden über die Verschiebung imaginärer Punkte auf der Fläche ermittelt. Die geometrische Modifikation des CAD-Modells bei der Schwindmaßeinbringung ändert nur die Lage und/oder den Durchmesser und eventuell die Ausrichtung der Flächen, nicht jedoch den Flächentyp (z.B. eben, zylindrisch, kegelig). Es erfolgt auch keine Topologieänderung des CAD-3D-Modells, d.h. die Anzahl der Modellelemente (Flächen, Kanten, Punkte) bleibt gleich.

Nach der automatisierten Schwindmaßeinbringung stehen alle ebenen Flächen im gleichen Winkel zueinander wie vorher; bei gekrümmten Flächen (z.B. Verrundungen, Bohrungen oder Senkungen) sind dann nur die Durchmesser und die Lagen geändert, jedoch nicht die Richtung der Achsen.

Zusätzlich kann der Formwerkzeugkonstrukteur wählen, ob einzelne Flächen des CAD-3D-Modells nach der Schwindmaßeinrichtrung weiterhin im gleichen Winkel zueinander stehen sollen oder aber angenähert an den tatsächlichen physikalischen Vorgang der Schwindung einen "Verzug" wiedergeben und nach der Schwindmaßeinrichtung in einem anderen Winkel zueinander stehen sollen.

## Ansprüche

1. Verfahren zum Verändern eines rechnergespeicherten CAD-3D-Modells eines Gußformteiles im Hinblick auf Schwindung **gekennzeichnet durch** folgende Merkmale:

a) die Modifizierung von CAD-3D-Modellflächen ($F_k$) wird aufgrund der schwindungsbedingten Ortsänderung von zugehörigen charakteristischen Punkten ($P_i$) vorgenommen, wobei

b) die Berechnung die Lage der charakteristischen Punkte zu einem ortsfesten Anspritzpunkt (A), den Fließweg ($F_R$) der Schmelze im CAD-3D-Modell und die unterschiedlichen Längs-und Querschwindungsfaktoren berücksichtigt.

2. Verfahren nach Anspruch 1, **dadurch gekennzeichnet**, daß

a) ebene CAD-3D-Modellflächen ($F_k$) aufgrund der schwindungsbedingten Ortsänderung ihrer charakteristischen Punkte ($P_i$) verschoben werden, wobei charakteristische Punkte der ebenenen CAD-3D-Modellflächen Eckpunkte, Flächenschwerpunkte, Netzpunkte, Projektions- und Durchtrittspunkte sind, indem für alle charakteristischen Punkte ($P_i$) jeder ebenen CAD-3D-Modellfläche die Schwindkoordinaten ($P_i'$) errechnet und abgespeichert werden, die Berechnung die Lage der charakteristischen Punkte zu einem ortsfesten Anspritzpunkt (A) und den Fließweg der Schmelze im CAD-3D-Modell und die unterschiedlichen Längs- und Querschwindungsfaktoren berücksichtigt,

c) aus den Schwindkoordinaten der charakteristischen Punkte für jede ebene CAD-3D-Modellfläche ein Verschiebungsvektor ($V_k$) über ein Mittelungsverfahren berechnet wird und

d) alle ebenen CAD-3D-Modellflächen um den Normalanteil ($T_k$) des Verschiebungsvektors längs ihrer Normalenrichtung verschoben werden.

3. Verfahren nach Anspruch 1, **dadurch gekennzeichnet**, daß a) gekrümmte analytisch beschreibbare CAD-3D-Modellflächen auf grund der schwindungsbedingten Ortsänderung ihrer charakteristischen Punkte verschoben und modifiziert werden, wobei als gekrümmte analytisch beschreibbare CAD-3D-Modellflächen insbesondere Zylinder-, Kegel-, Kugel- und Torusflächen angesehen werden und wobei charakteristische Punkte ($P_i$) der gekrümmten analytisch beschreibbaren CAD-3D-Modellflächen Eckpunkte, Flächenschwerpunkte, Punkte auf den Symmetrieachsen, Mittelpunkte, Netzpunkte sowie Projektions- und Durchtrittspunkte sind, indem

b) die Modifizierung die Lage der charakteristischen Punkte zu einem ortsfesten Anspritzpunkt (A) und den Fließweg der Schmelze im CAD-3D-Modell und die unterschiedlichen Längs-und Querschwindungsfaktoren berücksichtigt und

c) die Lage (Verschiebung der Flächenachse) und die Krümmung der gekrümmten, analytisch beschreibbaren CAD-3D-Modellflächen modifiziert werden.

4. Verfahren nach Anspruch 1, **dadurch gekennzeichnet**, daß

a) parametrisierte CAD-3D-Modellflächen aufgrund der schwindungsbedingten Ortsänderung ihrer charakteristischen Punkte ($P_i$) verschoben und modifiziert werden, wobei parametrisierte CAD-3D-Modellflächen Freiformflächen sind und charakeristische Punkte der parametrisierten CAD-3D-Modellflächen Eckpunkte, Flächenschwerpunkte, Netzpunkte, Projektionspunkte und Stützpunkte sind, indem

b) die Modifizierung die Lage der charakteristischen Punkte zu einem ortsfesten Anspritzpunkt (A), den Fließweg der Schmelze im CAD-3D-Modell und die unterschiedlichen Längs- und Querschwindungsfaktoren berücksichtigt und

c) die Lage (Verschiebung der charakteristischen Punkte) und die Krümmungsverhältnisse (Parameter) der parametrisierten CAD-3D-Modellflächen modifiziert werden.

88 P 3355

FIG 1

FIG 2

EP 0 357 971 A1

88 P 3355

Zielmaßmodell · Schwindmaßmodell

FIG 3

| Erstellung Nennmaß-modell | Modifikation Nennmaß-modell / Zielmaß-modell | Modifikation Zielmaß-modell / Schwindmaß-modell | Ableitung der Formeinsätze | NC-Verfahren |
|---|---|---|---|---|
| Formteil-konstruktion | Formeinsatzkonstruktion | | | Formeinsatz-fertigung |

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | MECHANICAL ENGINEERING, Band 110, Nr. 6, Juni 1988, Seiten 78-80, US; S.T. SMITH: "Coping with the warped personality of molded plastics" * Seite 78, Spalte 2, Zeile 24 - Spalte 3, Zeile 37; Seite 79, Spalte 3, Zeilen 4-10; Seite 80; Figuren * | 1 | G 06 F  15/60 G 06 F  15/72 |
| A | IDEM --- | 2-4 | |
| A | MACHINE DESIGN, Band 57, Nr. 11, 23. Mai 1985, Seiten 82-90, Cleveland, Ohio, US; "CAD software takes the pressure off mold makers" * Seite 85, Zeilen 33-36 * --- | 1 | |
| A | EP-A-0 161 964  (LA TELEMECANIQUE ELECTRIQUE) ----- | | |

### RECHERCHIERTE SACHGEBIETE (Int. Cl.5)

G 06 F  15/72
B 29 C  37/00
B 29 C  33/38
G 06 F  15/60
B 22 C   7/00
B 22 C   9/06

**Der vorliegende Recherchenbericht wurde für alle Patentansprüche erstellt**

| Recherchenort | Abschlußdatum der Recherche | Prüfer |
|---|---|---|
| DEN HAAG | 27-11-1989 | GUINGALE A. |

EPO FORM 1503 03.82 (P0403)